# EUROPÄISCHE PATENTANMELDUNG

(11) **EP 4 725 633 A1**
(43) Veröffentlichungstag der Anmeldung: **15.04.2026**
(21) Anmeldenummer: 24206155.4
(22) Anmeldetag: 11.10.2024
(51) Int. Cl.: B23K 9/12, B23K 9/133, B23K 9/173

(54) **DRAHTVORSCHUBSYSTEM FÜR EIN SCHWEISSGERÄT, SCHWEISSGERÄT, UND VERFAHREN ZUM FÖRDERN EINES SCHWEISSDRAHTS FÜR EIN SCHWEISSGERÄT**

(71) Anmelder: FRONIUS INTERNATIONAL GmbH, 4643 Pettenbach (AT)
(72) Erfinder: Waldhör, Andreas, 4643 Pettenbach (AT); Söllinger, Dominik, 4643 Pettenbach (AT)
(74) Vertreter: Bratovic, Nino Maria

(57) **Zusammenfassung**

Die Erfindung schafft ein Drahtvorschubsystem (100) sowie ein Verfahren zum Steuern eines Drahtvorschubs eines Schweißgeräts (1000) sowie ein Schweißgerät (1000). Das Drahtvorschubsystem (100) umfasst zumindest:
eine Schweißdraht-Speichereinrichtung (110), welche derart ausgebildet ist, dass eine aktuell darin angeordnete, variable Drahtmenge eines Schweißdrahts (42) als ein einstellbarer Schweißdrahtpuffer fungiert;
einen Schweißdraht-Push-Motor (121), mittels welchem der Schweißdraht (42) zu der Schweißdraht-Speichereinrichtung (100) hin förderbar ist;
einen Schweißdraht-Pull-Motor (129), mittels welchem der Schweißdraht (42) von der Schweißdraht-Speichereinrichtung (100) fort förderbar ist; und
eine Steuereinrichtung (130), welche zum Durchführen eines Drahtvorschub-Programms eingerichtet ist, welches mindestens zwei Drahtvorschub-Phasentypen mit jeweils zumindest unterschiedlichen mittleren Drahtvorschub-Geschwindigkeiten (Vd) des Schweißdraht-Pull-Motors (129) umfasst, und
wobei die Steuereinrichtung (130) außerdem dazu eingerichtet ist, den Schweißdrahtpuffer in einer Drahtvorschubphase (P1, P3) eines ersten Drahtvorschub-Phasentyps (T1) vorbereitend für eine jeweils nachfolgende Drahtvorschubphase (P2, P4) eines zweiten Drahtvorschub-Phasentyps (T2) einzustellen.

## Beschreibung

### Gebiet der Erfindung

Die Erfindung betrifft ein Drahtvorschubsystem für ein Schweißgerät, ein Schweißgerät mit einem Drahtvorschubsystem, und Verfahren zum Fördern eines Schweißdrahts für ein Schweißgerät.

### Technischer Hintergrund

Bei Schweißprozessen mit abschmelzender Drahtelektrode wird ein Schweißdraht durch ein Drahtvorschubsystem zu einem Schweißbrenner gefördert. Je schneller der Schweißdraht an dem Schweißbrenner abgeschmolzen wird, desto schneller muss dieser nachgefördert werden. Während Schweißprozessen mit hoher Abschmelzrate wird somit eine typische durchschnittliche Drahtvorschubgeschwindigkeit größer sein als bei Schweißprozessen mit niedriger Abschmelzrate.

Moderne hochentwickelte Schweißverfahren verwenden komplexe Kennlinien für Schweißparameter (Spannung, Strom, Drahtvorschubgeschwindigkeit) um optimale Schweißergebnisse zu produzieren. Dabei werden mitunter Schweißphasen verschiedenen Typs miteinander kombiniert, beispielsweise miteinander abgewechselt, wobei zu jedem Typ von Schweißphase auch ein Drahtvorschub-Phasentyp gehört, welcher eine für den jeweiligen Typ von Schweißphase passende, jeweilige momentane Drahtvorschubgeschwindigkeit angibt oder einstellt.

Abgesehen von ihrer jeweiligen durchschnittlichen (oder: mittleren) Drahtvorschubgeschwindigkeit können sich die Drahtvorschub-Phasentypen auch in ihrer Dynamik unterscheiden, d.h. darin, in wie kurzen zeitlichen Abständen Änderungen der Drahtvorschubgeschwindigkeit erfolgen müssen, bzw. welche Beschleunigungen oder Verzögerungen der Drahtvorschubgeschwindigkeit benötigt werden.

Aufgrund von verschiedenen Faktoren (z.B. der Trägheit des Drahtvorschubsystems und des Schweißdrahtes) können typische Schweißdraht-Push-Motoren, die für gewöhnlich in oder an der Schweißstromquelle oder in deren Nähe angeordnet sind, nicht genauso dynamisch agieren, wie dies am Schweißbrenner benötigt wird. Hierfür ist typischerweise ein Schweißdraht-Pull-Motor an dem Schweißbrenner vorgesehen, welcher die gewünschte Drahtvorschubgeschwindigkeit für den Schweißprozess präzise einstellt.

Es wird häufig gewünscht, den Abspulvorgang des Schweißdrahtes, etwa von einer Spule oder aus einem Fass, von den dynamischen Vorgängen am Schweißbrenner zu entkoppeln. Das Drahtvorschubsystem hat jedoch gleichzeitig unter anderem die Aufgabe, dass stets genug Schweißdraht am Schweißbrenner zur Verfügung steht.

Als Lösung dafür ist es bekannt, einen so genannten Schweißdrahtpuffer vorzusehen, also ein Reservoir von Schweißdraht, aus welchem ein hochdynamischer Schweißprozess entnehmen kann, für den Fall, dass der Schweißdraht-Push-Motor den Schweißdraht nicht rechtzeitig selbst mit der benötigten Geschwindigkeit bereitstellen kann. Somit kann an eine Abspulgeschwindigkeit (oder: Anfangsgeschwindigkeit, oder: Abspul-Drahtvorschubgeschwindigkeit) des Schweißdrahtes an dem Schweißdraht-Push-Motor sich von der momentanen, aber auch von der durchschnittlichen Drahtvorschubgeschwindigkeit an dem Schweißdraht-Pull-Motor unterscheiden.

In dem österreichischen Patent AT 413 661 B beispielsweise wird eine Puffervorrichtung für einen Schweißdraht beschrieben.

Eine weitere Schweißdraht-Speichervorrichtung wird in EP 1 708 842 A1 beschrieben. Diese umfasst ein winkelförmiges Gehäuse entlang des Verlaufs des Schweißdrahts, wobei in dem Gehäuse ein Schweißdrahtpuffer mit je unterschiedlichem Radius des in dem Gehäuse angeordneten Schweißdrahts ausgebildet wird.

Um den Schweißvorgang und die Handhabung des Schweißgeräts nicht zu erschweren, sollte eine Schweißdraht-Speichervorrichtung mit möglichst kleinen Abmessungen ausgebildet sein. Beispielsweise spielt die Außenkontur des Schweißgeräts für Roboteranwendungen eine große Rolle, da diese bei der Wegführung und Steuerung eines Roboters beachtet werden muss. Schweißdraht-Speichervorrichtungen mit großen Abmessungen können unerwünschte Störkonturen erzeugen. Gleichzeitig wird der maximal mögliche Schweißdrahtpuffer durch die Abmessungen der Schweißdraht-Speichervorrichtung begrenzt.

### Zusammenfassung der Erfindung

Nach all dem Vorangehenden ist es daher eine Aufgabe der vorliegenden Erfindung, eine weiter verbessertes Drahtvorschubsystem mit Schweißdrahtpuffer bereitzustellen, sowie ein verbessertes Schweißgerät, und ein verbessertes Verfahren zum Fördern eines Schweißdrahts für ein Schweißgerät. Gleichzeitig wird danach gestrebt, das Drahtvorschubsystem möglichst klein, und möglichst vielseitig einsetzbar auszubilden.

Die Erfindung stellt somit, gemäß einem ersten Aspekt, ein Drahtvorschubsystem für ein Schweißgerät bereit, umfassend zumindest:
eine Schweißdraht-Speichereinrichtung, welche derart ausgebildet ist, dass eine aktuell darin angeordnete, variable Drahtmenge eines die Schweißdraht-Speichereinrichtung durchquerenden Schweißdrahts als ein einstellbarer Schweißdrahtpuffer fungiert;
einen Schweißdraht-Push-Motor, mittels welchem der Schweißdraht zu der Schweißdraht-Speichereinrichtung hin förderbar ist;
einen Schweißdraht-Pull-Motor, mittels welchem der Schweißdraht von der Schweißdraht-Speichereinrichtung fort förderbar ist (insbesondere in Richtung eines Kontaktrohres eines Schweißbrenners eines Schweißgeräts); und
eine Steuereinrichtung, welche zum Durchführen eines Drahtvorschub-Programms eingerichtet ist, wobei das Drahtvorschub-Programm mindestens zwei Drahtvorschub-Phasentypen mit jeweils zumindest unterschiedlichen mittleren Drahtvorschub-Geschwindigkeiten des Schweißdraht-Pull-Motors umfasst, und
wobei die Steuereinrichtung außerdem dazu eingerichtet ist, den Schweißdrahtpuffer, zumindest durch entsprechendes Steuern des Schweißdraht-Push-Motors, in einer Drahtvorschubphase eines ersten Drahtvorschub-Phasentyps vorbereitend für eine jeweils nachfolgende Drahtvorschubphase eines zweiten Drahtvorschub-Phasentyps einzustellen.

Unter einem Schweißdrahtpuffer ist insbesondere eine Länge von Schweißdraht zu verstehen, welche an einem Schweißbrenner des Schweißgeräts verbraucht oder zumindest in Richtung des Werkstücks gefördert werden kann, ohne dass der Schweißdraht voll auf Spannung geht und der Drahtvorschub damit zum Erliegen kommt. Der Schweißdrahtpuffer ermöglicht es somit, an dem Schweißbrenner eine hochdynamische Steuerung des Schweißdrahts vorzunehmen, ohne dass der Schweißdraht-Push-Motor unbedingt genauso dynamisch ausgebildet sein muss.

Die Schweißdraht-Speichereinrichtung kann beispielsweise ausgebildet sein wie in EP 1 708 842 A1 beschrieben, wobei EP 1 708 842 A1 hiermit durch Bezugnahme vollständig in die vorliegende Beschreibung mit aufgenommen wird. Eine derart ausgebildete Schweißdraht-Speichereinrichtung ist auch als "Winkelspeicher" bezeichenbar. Andere Formen sind jedoch ebenfalls denkbar, beispielsweise S-förmige Schweißdraht-Speichereinrichtungen (also mit einem S-förmigen Verlauf des Schweißdrahts darin), Formen mit drei oder mehr Krümmungsänderungen des Schweißdrahts darin, oder dergleichen.

Unter dem vorbereitenden Einstellen des Schweißdrahtpuffers ist zu verstehen, dass der in der Drahtvorschubphase des erste Drahtvorschub-Phasentyps vorliegende Schweißdrahtpuffer bereits innerhalb dieser Drahtvorschubphase verändert wird, um einen für die jeweils nachfolgende Drahtvorschubphase passenden Schweißdrahtpuffer bereitzustellen.

Hierzu kann insbesondere eine Abspulgeschwindigkeit Va, mit welcher der Schweißdraht-Push-Motor den Schweißdraht in das Drahtvorschubsystem einfördert, von der durchschnittlichen Drahtvorschubgeschwindigkeit Vd des Schweißdrahtes am Kontaktrohr des Schweißbrenners unterschiedlich eingestellt werden. Der Schweißdrahtpuffer erhöht sich, wenn die Abspulgeschwindigkeit Va die durchschnittliche Drahtvorschubgeschwindigkeit Vd übersteigt, Va>Vd, und verringert sich im umgekehrten Fall, Vd>Va. Die durchschnittliche Drahtvorschubgeschwindigkeit Vd entspricht typischerweise der Abschmelzgeschwindigkeit des Schweißdrahtes, also der Länge an Schweißdraht, welche pro Zeiteinheit abgeschmolzen wird und daher durch die durchschnittliche Drahtvorschubgeschwindigkeit nachgefördert werden muss.

Erfindungsgemäß kann somit der jeweils aktuelle vorhandene Schweißdrahtpuffer optimal auf die zu bewältigende Schweißaufgabe, oder genauer, auf den Drahtvorschub-Phasentyp der anstehenden Drahtvorschubphase, eingestellt sein. Ist nämlich im Stand der Technik der Schweißdrahtpuffer zu klein eingestellt, wird bei einem hochdynamischen positiven Drahtvorschub nicht genügend Schweißdraht bereitgestellt. Ist jedoch im Stand der Technik der Schweißdrahtpuffer zu groß eingestellt, kann bei einem hochdynamischen negativen Drahtvorschub der rückgeförderte Schweißdraht nicht mehr vollständig in der Schweißdraht-Speichereinrichtung aufgenommen werden. Beides kann zu Problemen oder zu einer unerwünschten Unterbrechung des Schweißvorgangs führen.

Die genannte Steuereinrichtung kann als eine beliebige Vorrichtung realisiert sein oder werden, welche zum Rechnen, und insbesondere zum Ausführen einer Software, einer App, oder eines Algorithmus in der Lage ist. Die Steuereinrichtung kann beispielsweise mindestens eine Prozessoreinheit aufweisen, z. B. eine Zentralprozessoreinheit (CPU) und/oder eine Graphikprozessoreinheit (GPU) und/oder eine Feldprogrammierbare Logikschaltung (FPGA) und/oder eine anwendungsspezifische integrierte Schaltung (ASIC) und/oder eine Kombination davon. Die Steuereinrichtung kann außerdem einen Arbeitsspeicher aufweisen, welcher mit der mindestens einen Prozessoreinheit operativ gekoppelt ist, sowie einen nicht-flüchtigen Speicher, welcher mit der mindestens einen Prozessoreinheit und dem Arbeitsspeicher operativ gekoppelt ist. Die Steuereinrichtung kann ganz oder vollständig in einem lokalen Gerät, etwa einer Drahtvorschubeinrichtung, einer Schweißstromquelle und/oder einem Schweißgerät, und/oder ganz oder vollständig in einem entfernten System implementiert sein wie etwa in einem entfernt angeordneten Server und/oder einer Cloud-Computing-Plattform.

Gemäß einigen bevorzugten Ausführungsformen, Varianten oder Verfeinerungen von Ausführungsformen weist der erste Drahtvorschub-Phasentyp eine erste durchschnittliche Drahtvorschubgeschwindigkeit Vd1 des Schweißdraht-Pull-Motors auf. Die Steuereinrichtung ist vorteilhaft dazu eingerichtet, in jeder Drahtvorschubphase des ersten Drahtvorschub-Phasentyps den Schweißdrahtpuffer von einem ersten Schweißdrahtpufferniveau auf ein zweites Schweißdrahtpufferniveau zu erhöhen, falls der zweite Drahtvorschub-Phasentyp eine zweite durchschnittliche Drahtvorschubgeschwindigkeit Vd2 des Schweißdraht-Pull-Motors aufweist, welche höher ist als die erste durchschnittliche Drahtvorschubgeschwindigkeit Vd1 (d.h., Vd2>Vd1).

Somit kann für Drahtvorschubphasen (oder, anders ausgedrückt, für Drahtvorschub-Phasentypen) mit höherer durchschnittlicher Drahtvorschubgeschwindigkeit, wo typischerweise auch höhere Drahtvorschub-Momentangeschwindigkeiten des Schweißdraht-Pull-Motors vorliegen (da die durchschnittliche Drahtvorschubgeschwindigkeit als Durchschnitt der Drahtvorschub-Momentangeschwindigkeiten gebildet wird), regelmäßig ein größeres Schweißdrahtpufferniveau bereitgestellt werden.

Gemäß einigen bevorzugten Ausführungsformen, Varianten oder Verfeinerungen von Ausführungsformen ist die Steuereinrichtung dazu eingerichtet, den Schweißdrahtpuffer jeweils spätestens zu Beginn von Drahtvorschubphasen des ersten Drahtvorschub-Phasentyps auf das erste Schweißdrahtpufferniveau P1, und jeweils spätestens zu Beginn von Drahtvorschubphasen des zweiten Drahtvorschub-Phasentyps auf das zweite Schweißdrahtpufferniveau einzustellen, d.h., das Drahtvorschubsystem derart zu steuern, dass jeweils zu Beginn des entsprechenden Drahtvorschub-Phasentyps das entsprechende Schweißdrahtpufferniveau vorliegt. Somit ist das Drahtvorschubsystem immer optimal auf die bevorstehende Drahtvorschubphase eingestellt.

Gemäß einigen bevorzugten Ausführungsformen, Varianten oder Verfeinerungen von Ausführungsformen ist die Steuereinrichtung dazu eingerichtet, in einer jeweiligen Drahtvorschubphase des zweiten Drahtvorschub-Phasentyps den Schweißdrahtpuffer von dem zweiten Schweißdrahtpufferniveau auf das erste Schweißdrahtpufferniveau zu verringern, falls sich an die Drahtvorschubphasen des zweiten Drahtvorschub-Phasentyps jeweils eine Drahtvorschubphase des ersten Drahtvorschub-Phasentyps anschließt.

Die Steuereinrichtung kann auch dazu eingerichtet sein, in einer jeweiligen Drahtvorschubphase des zweiten Drahtvorschub-Phasentyps den Schweißdrahtpuffer von dem zweiten Schweißdrahtpufferniveau auf ein drittes Schweißdrahtpufferniveau zu verringern, welches niedriger ist als das zweite Schweißdrahtpufferniveau, falls sich an die Drahtvorschubphasen des zweiten Drahtvorschub-Phasentyps jeweils eine Drahtvorschubphase eines dritten Drahtvorschub-Phasentyps anschließt, welcher eine dritte durchschnittliche Drahtvorschubgeschwindigkeit Vd3 des Schweißdraht-Pull-Motors aufweist, welche kleiner ist als die zweite durchschnittliche Drahtvorschubgeschwindigkeit Vd2 (d.h. Vd3<Vd2).

Gemäß einigen bevorzugten Ausführungsformen, Varianten oder Verfeinerungen von Ausführungsformen beträgt ein betragsmäßiger Unterschied zwischen einer mittleren Drahtvorschubgeschwindigkeit des Schweißdraht-Pull-Motors des ersten Drahtvorschub-Phasentyps und einer mittleren Drahtvorschubgeschwindigkeit des Schweißdraht-Pull-Motors des zweiten Drahtvorschub-Phasentyps mindestens 0,1 m/min, bevorzugt 1 m/min, insbesondere mindestens 5 m/min, besonders bevorzugt mindestens 7 m/min. Je größer der Unterschied zwischen Drahtvorschubgeschwindigkeiten ist, desto vorteilhafter ist es, den Schweißdrahtpuffer rechtzeitig und angemessen einzustellen.

Gemäß einigen bevorzugten Ausführungsformen, Varianten oder Verfeinerungen von Ausführungsformen die Steuereinrichtung dazu eingerichtet, dem Schweißdraht-Push-Motor zumindest während Drahtvorschubphasen des ersten Drahtvorschub-Phasentyps (und/oder Drahtvorschubphasen des zweiten Drahtvorschub-Phasentyps und/oder Drahtvorschubphasen des dritten Drahtvorschub-Phasentyps etc.) eine Abspulbeschleunigung und/oder ein mit dieser während der entsprechenden Drahtvorschubphase zu erreichendes Schweißdrahtpufferniveau vorzugeben. Auf diese Weise kann eine anwendungsgemäße, kontrollierte Veränderung des Schweißdrahtpufferniveaus erfolgen.

Gemäß einigen bevorzugten Ausführungsformen, Varianten oder Verfeinerungen von Ausführungsformen ist die Steuereinrichtung derart eingestellt, dass das Einstellen des Schweißdrahtpuffers in einer jeweiligen Drahtvorschubphase spätestens mit Ablauf eines vorbestimmten Prozentsatzes der jeweiligen Drahtvorschubphase beginnt, vorzugsweise eines Prozentsatzes von 50% oder höher, etwa nach einem Ablauf von 60% der jeweiligen Drahtvorschubphase, oder 70%, 80%, 90% oder dergleichen. Somit bleibt der Schweißdrahtpuffer für die jeweils aktuelle Drahtvorschubphase größtenteils korrekt eingestellt, während gleichzeitig eine rechtzeitige und korrekte Einstellung des Schweißdrahtpufferniveaus für die jeweils nachfolgende Drahtvorschubphase bewerkstelligt wird.

Die Verwendung eines Prozentsatzes für den Beginn des Einstellens ist insbesondere dann vorteilhaft, wenn die Drahtvorschubphase eine variable Dauer aufweist und stattdessen z.B. durch eine festgelegte Anzahl von Prozessschritten oder eine vorbestimmte, zu erreichende Quantität (z.B. eine bestimmte Länge einer Schweißnaht, eine bestimmte Menge abgeschmolzenen Schweißdrahts o.ä.) begrenzt wird.

Gemäß einigen bevorzugten Ausführungsformen, Varianten oder Verfeinerungen von Ausführungsformen ist die Steuereinrichtung derart eingestellt, dass das Einstellen des Schweißdrahtpuffers in einer jeweiligen Drahtvorschubphase spätestens mit Ablauf einer vorbestimmten Zeitdauer nach Beginn der jeweiligen Drahtvorschubphase beginnt, insbesondere nach Ablauf einer Zeitdauer von 10 Millisekunden.

Gemäß einigen bevorzugten Ausführungsformen, Varianten oder Verfeinerungen von Ausführungsformen ist die Steuereinrichtung derart eingestellt, dass das Einstellen des Schweißdrahtpuffers in einer jeweiligen Drahtvorschubphase spätestens nach Durchführung einer vorbestimmten Anzahl von Schweißzyklen durch das Schweißgerät während der Drahtvorschubphase beginnt.

Gemäß einigen bevorzugten Ausführungsformen, Varianten oder Verfeinerungen von Ausführungsformen ist die Steuereinrichtung derart eingestellt, dass sich mindestens zwei Drahtvorschub-Phasentypen in regelmäßiger Abfolge gegenseitig abwechseln, und während jeder Drahtvorschubphase jeweils der Schweißdrahtpuffer für die jeweils nachfolgende Drahtvorschubphase eingestellt wird.

Gemäß einigen bevorzugten Ausführungsformen, Varianten oder Verfeinerungen von Ausführungsformen ist die Schweißdraht-Speichereinrichtung zwischen dem Schweißdraht-Push-Motor und dem Schweißdraht-Pull-Motor angeordnet. Der Schweißdraht-Push-Motor und der Schweißdraht-Pull-Motor zusammen sind auch als Push-Pull-System bezeichenbar. Somit kann der Schweißdraht-Pull-Motor die dynamische Bewegung der abschmelzbaren Drahtelektrode (d.h. des vorderen Endes des Schweißdrahts) bewirken, während der Schweißdraht-Push-Motor davon weitgehend entkoppelt das Abspulen und Nachfördern des Schweißdrahts besorgt.

Gemäß einigen bevorzugten Ausführungsformen, Varianten oder Verfeinerungen von Ausführungsformen ist die Steuereinrichtung dazu eingerichtet, den Schweißdrahtpuffer während den Drahtvorschubphasen im laufenden Betrieb des Drahtvorschubsystems und/oder im laufenden Betrieb eines Schweißgeräts einzustellen. Unter dem "laufenden Betrieb" ist gemeint, dass die Einstellung nicht etwa ausschließlich in einem Schweiß-Startprozess (z.B. einem Prozess zum Lichtbogenzünden und/oder zur Schlackenentfernung vom Schweißdraht) stattfindet, sondern in einem Betriebsmodus, welcher für tatsächliche Schweißaufgaben genutzt wird, insbesondere über einen längeren Zeitpunkt hinweg (z.B. eine Schweißnaht).

Gemäß einigen bevorzugten Ausführungsformen, Varianten oder Verfeinerungen von Ausführungsformen umfasst fungiert eine Drahtseele für den Schweißdraht als Schweißdraht-Speichervorrichtung, und ein Drahtspiel des Schweißdrahts in der Drahtseele stellt den Schweißdrahtpuffer bereit. Auf diese Weise wird die Außenkontur des Schweißgeräts durch die vorliegende Erfindung vorteilhaft in keiner Weise verändert.

Gemäß einem zweiten Aspekt stellt die Erfindung ein Schweißgerät bereit, welches eine Schweißstromquelle und ein Drahtvorschubsystem nach einer Ausführungsform des ersten Aspekts der vorliegenden Erfindung umfasst. Die Steuereinrichtung des Drahtvorschubsystems kann in der Schweißstromquelle angeordnet sein, insbesondere als Teil einer Steuerungsvorrichtung der Schweißstromquelle. Es kann aber auch ein für die Schweißstromquelle externes Drahtvorschubsystem vorgesehen sein. Insbesondere bei Roboteranwendungen erhöht dies die Flexibilität.

Gemäß einem dritten Aspekt stellt die Erfindung außerdem ein Verfahren zum Fördern eines Schweißdrahts für ein Schweißgerät bereit, umfassend zumindest die Schritte:
Durchführen eines Drahtvorschub-Programms, wobei das Drahtvorschub-Programm mindestens zwei Drahtvorschub-Phasentypen mit jeweils zumindest unterschiedlichen mittleren Drahtvorschubgeschwindigkeiten eines Schweißdraht-Pull-Motors des Schweißgeräts umfasst;
wobei das Durchführen des Drahtvorschub-Programms umfasst:
   Steuern zumindest eines Schweißdraht-Push-Motors; und
   Einstellen, in einer jeweiligen Drahtvorschubphase eines ersten Drahtvorschub-Phasentyps, eines Schweißdrahtpuffers vorbereitend auf eine jeweils nachfolgende Drahtvorschubphase eines zweiten Drahtvorschub-Phasentyps,
wobei der Schweißdrahtpuffer durch Variieren einer aktuell in einer Schweißdraht-Speichereinrichtung angeordneten, variablen Drahtmenge des die Schweißdraht-Speichereinrichtung durchquerenden Schweißdrahts eingestellt wird.

Gemäß einem vierten Aspekt stellt die vorliegende Erfindung ein Computerprogrammprodukt bereit, welches ausführbaren Programmcode umfasst, welcher, wenn er von einer Recheneinrichtung ausgeführt wird, das Verfahren gemäß einer Ausführungsform des dritten Aspekts der vorliegenden Erfindung durchführt.

Eine solche Recheneinrichtung kann als eine beliebige Vorrichtung realisiert sein oder werden, welche zum Rechnen, und insbesondere zum Ausführen einer Software, einer App, oder eines Algorithmus in der Lage ist. Die Recheneinrichtung kann beispielsweise mindestens eine Prozessoreinheit aufweisen, z. B. eine Zentralprozessoreinheit (CPU) und/oder eine Graphikprozessoreinheit (GPU) und/oder eine Feldprogrammierbare Logikschaltung (FPGA) und/oder eine anwendungsspezifische integrierte Schaltung (ASIC) und/oder eine Kombination davon. Die Recheneinrichtung kann außerdem einen Arbeitsspeicher aufweisen, welcher mit der mindestens einen Prozessoreinheit operativ gekoppelt ist, sowie einen nicht-flüchtigen Speicher, welcher mit der mindestens einen Prozessoreinheit und dem Arbeitsspeicher operativ gekoppelt ist. Die Recheneinrichtung kann ganz oder vollständig in einem lokalen Gerät und/oder ganz oder vollständig in einem entfernten System implementiert sein wie etwa in einem entfernt angeordneten Server und/oder einer Cloud-Computing-Plattform.

Gemäß einem fünften Aspekt stellt die vorliegende Erfindung ein nicht-flüchtiges, computerlesbares Datenspeichermedium bereit, welches ausführbaren Programmcode umfasst, welcher, wenn er von einer Recheneinrichtung ausgeführt wird, das Verfahren gemäß einer Ausführungsform des ersten Aspekts der vorliegenden Erfindung durchführt.

Das Datenspeichermedium kann beispielsweise als ein Halbleiterspeicher, z. B. ein SSD-Speicherstein ausgebildet sein oder einen solchen aufweisen. Das Datenspeichermedium kann auch eine CD, DVD, Blu-Ray oder eine magnetische Speichervorrichtung aufweisen oder umfassen.

Gemäß einem sechsten Aspekt stellt die vorliegende Erfindung einen Datenstrom bereit, welcher ausführbaren Programmcode umfasst oder zum Erzeugen von ausführbaren Programmcode ausgelegt ist, welcher, wenn er von einer Recheneinrichtung ausgeführt wird, das Verfahren gemäß einer Ausführungsform des ersten Aspekts der vorliegenden Erfindung durchführt.

Weitere bevorzugte Ausführungsformen, Varianten und Weiterbildungen von Ausführungsformen ergeben sich aus den Unteransprüchen sowie aus der Beschreibung unter Bezugnahme auf die Figuren.

### Kurze Beschreibung der Figuren

Die Erfindung wird nachstehend anhand von Ausführungsbeispielen in den Figuren der Zeichnungen näher erläutert. Es zeigen:
- Fig. 1: eine schematische Darstellung eines Drahtvorschubsystems gemäß einer Ausführungsform der vorliegenden Erfindung sowie eines Schweißgeräts gemäß einer weiteren Ausführungsform der vorliegenden Erfindung;
- Fig. 2: eine schematische Detaildarstellung einer Schweißdraht-Speichereinrichtung des erfindungsgemäßen Drahtvorschubsystems gemäß einer Ausführungsform;
- Fig. 3: einen beispielhaften Verlauf einer momentanen Drahtvorschubgeschwindigkeit an einem Schweißdraht-Pull-Motor;
- Fig. 4a): einen möglichen zeitlichen Verlauf einer durchschnittlichen Drahtvorschubgeschwindigkeit während der Durchführung eines Drahtvorschubprogramms gemäß der vorliegenden Erfindung;
- Fig. 4b): einen möglichen zeitlichen Verlauf einer Abspulgeschwindigkeit während der Durchführung eines Drahtvorschubprogramms gemäß der vorliegenden Erfindung;
- Fig. 4c): eine graphische Darstellung eines möglichen zeitlichen Verlaufs eines Schweißdrahtpuffers während der Durchführung eines Drahtvorschubprogramms gemäß der vorliegenden Erfindung;
- Fig. 4d): eine Variante von Fig. 4c);
- Fig. 4e): eine weitere Variante von Fig. 4c);
- Fig. 5 a) bis c): Graphen zur schematischen Erläuterung einer Variante zur Durchführung des Drahtvorschubprogramms gemäß Fig. 4a)-c);
- Fig. 6 a) bis c): Graphen zur schematischen Erläuterung einer weiteren Variante zur Durchführung des Drahtvorschubprogramms gemäß Fig. 4a)-c);
- Fig. 7: ein schematisches Flussdiagramm zum Erläutern eines Verfahrens gemäß einer weiteren Ausführungsform der vorliegenden Erfindung;
- Fig. 8: ein schematisches Blockdiagramm eines Computerprogrammprodukts gemäß einer Ausführungsform der vorliegenden Erfindung; und
- Fig. 9: ein schematisches Blockdiagramm eines Datenspeichermediums gemäß einer Ausführungsform der vorliegenden Erfindung.

In sämtlichen Figuren sind gleiche bzw. funktionsgleiche Elemente und Vorrichtungen - sofern nichts anderes angegeben ist - mit denselben Bezugszeichen versehen worden. Die Bezeichnung und Nummerierung der Verfahrensschritte impliziert nicht zwangsläufig eine Reihenfolge, sondern dient der besseren Unterscheidung, obwohl in einigen Varianten die Reihenfolge auch der Reihenfolge der Nummerierung entsprechen kann.

### Detaillierte Beschreibung der Figuren

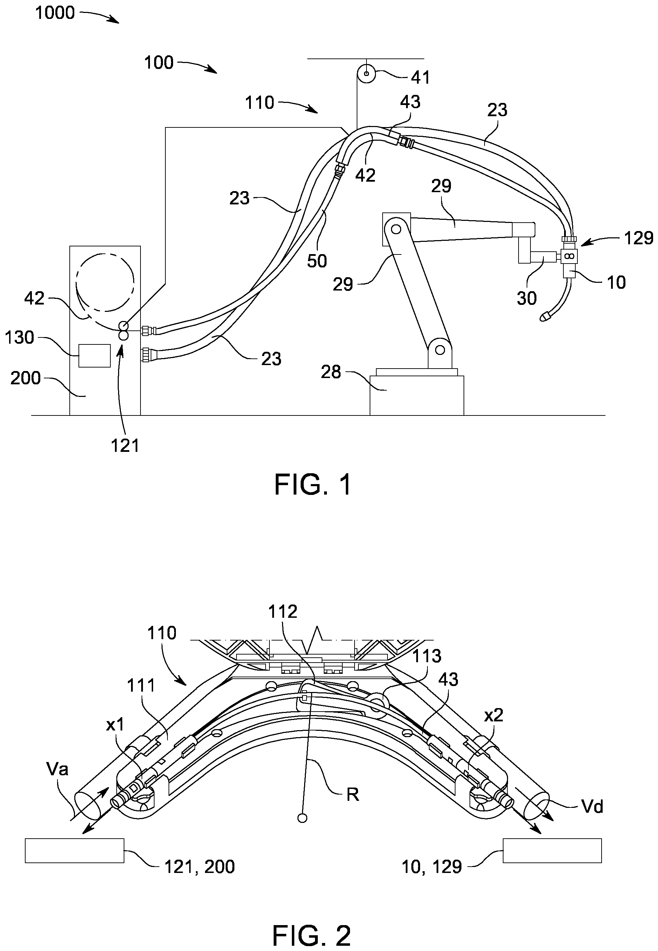

Fig. 1 zeigt eine schematische Darstellung eines Drahtvorschubsystems 100 gemäß einer Ausführungsform der vorliegenden Erfindung sowie ein Schweißgerät 1000 gemäß einer weiteren Ausführungsform der vorliegenden Erfindung. In Fig. 1 ist das Schweißgerät 1000 als ein Roboter-Schweißgerät dargestellt, jedoch ist ebenso eine Ausgestaltung als manuelles Schweißgerät möglich.

Das Drahtvorschubsystem 100 umfasst eine Schweißdraht-Speichereinrichtung 110, welche derart ausgebildet ist, dass eine aktuell darin angeordnete, variable Drahtmenge eines die Schweißdraht-Speichereinrichtung 110 durchquerenden Schweißdrahts 42 als ein einstellbarer Schweißdrahtpuffer für das Schweißgerät 1000 fungiert.

Die Schweißdraht-Speichereinrichtung 110 kann, wie in Fig. 1 schematisch dargestellt ist, an einer Haltevorrichtung 41, z.B. einem Balancer, angebracht werden; alternativ kann sie jedoch beispielsweise auch an einem Roboterarm 29 oder einem Manipulator 30 eines Roboter 28 angebracht sein, oder am Schweißbrenner 10 des Schweißgeräts 1000.

Fig. 2 zeigt eine schematische Detailansicht der Schweißdraht-Speichereinrichtung 110, welche hier beispielhaft als ein Winkelspeicher ausgebildet ist. Sie umfasst somit ein abgewinkeltes Gehäuse 111, durch welchen der Schweißdraht 42 innerhalb einer Drahtseele 43 verläuft. Die Drahtseele 43 kann ganz oder teilweise innerhalb eines Schlauchpakets 23 des Schweißgeräts 1000 verlaufen und/oder ganz oder teilweise in einem eigenen Drahtführungsschlauch 50 angeordnet sein (siehe Fig. 1).

Das Gehäuse 111 ist vorzugsweise mit einem Winkel größer als 90°, insbesondere größer als 100°, bevorzugt größer als 110°, ausgebildet. Je flacher, also je näher an 180°, der Winkel verläuft, desto weniger Ansprüche bestehen an die Platzierung der Schweißdraht-Speichereinrichtung 110 in oder an dem Schlauchpaket 23 oder dem Drahtführungsschlauch 50 des Schweißgeräts 1000. Im Folgenden wird die Beschreibung zunächst vor allem anhand von Fig. 2, mit Blick auf die Gesamtanordnung jedoch teilweise auch mit Bezug auf Fig. 1 fortgesetzt.

Ein Krümmungsradius R der Drahtseele 43 und somit (im Wesentlichen) auch des Schweißdrahts 42 ist beispielsweise dadurch veränderbar, dass die Drahtseele 43 an einer ersten Position x1 an einem zu einem Schweißdraht-Push-Motor 121 des Drahtvorschubsystems 100 gewandten Ende des Gehäuses 111 frei axial frei verschiebbar ist, während sie an einer zweiten Position x2 an einem dem Schweißbrenner 10 des Schweißgeräts 1000 zugewandten Ende fixiert ist. Die Drahtvorschubgeschwindigkeit Vd an dem Schweißbrenner 10 wird maßgeblich, oder vollständig, durch einen Schweißdraht-Pull-Motor 129 eingestellt, welcher im gezeigten Beispiel an dem Schweißbrenner 10 angeordnet ist.

Durch einen Drahtvorschub des Schweißdraht-Push-Motors 121 in Richtung des Gehäuses 111 mit einer durchschnittlichen Abspulgeschwindigkeit Va, welche eine durchschnittliche Drahtvorschubgeschwindigkeit Vd von dem Gehäuse 111 aus in Richtung des Schweißbrenners 10 übersteigt (also Va>Vd im Durchschnitt), kann somit in dem Gehäuse 111 durch stärkeres Auslenken und Krümmen des Schweißdrahts 42 und damit der Drahtseele 43 der Schweißdrahtpuffer vergrößert werden. Umgekehrt wird durch Vd>Va im Durchschnitt der Schweißdrahtpuffer verringert und somit der Radius R der Drahtseele 43 und des Schweißdrahts 42 darin vergrößert.

Die Drahtvorschubgeschwindigkeit Vd an dem Schweißbrenner 10 unterscheidet sich von der Abspulgeschwindigkeit Va an dem Schweißdraht-Push-Motor 121 einerseits durch das Spiel des Schweißdrahts 42 und der Drahtseele 43 zwischen einer Schweißstromquelle 200 des Schweißgeräts 1000 und dem Schweißbrenner 10, insbesondere aber typischerweise durch das Zutun des Schweißdraht-Pull-Motors 129, welcher die häufig hochdynamischen Bewegungen des Schweißdrahts 42 am Schweißbrenner 10 bewirkt.

Um den Füllstand des Winkelspeichers, also das aktuelle Niveau des Schweißdrahtpuffers (oder: das Schweißdrahtpufferniveau), erfassen zu können, kann das Drahtvorschubsystem 100 ein Messmittel aufweisen. Bei dem dargestellten Ausführungsbeispiel umfasst das Messmittel einen Winkelsensor, beispielsweise einen Inkrementalgeber, ein Potentiometer oder dgl., welcher über einen Hebel 112 und eine drehbar gelagerte Klemme 113, einem sogenannten "Seelenclip", mit der Drahtseele 43 verbunden ist. Somit kann bei einer Änderung des Radius R der bogenförmig verlaufenden Drahtseele 43 diese Änderung erfasst werden, worauf eine entsprechende Umsetzung der Impulse bzw. eine Berechnung des Schweißdrahtpuffers erfolgen kann, beispielsweise durch eine Steuereinrichtung 130 des Drahtvorschubsystems 100. Die Steuereinrichtung 130 kann dazu eingerichtet sein, basierend auf dem Signal des Messmittels kann die Steuereinrichtung 130 das Schweißdrahtpufferniveau zu regeln.

Die Steuereinrichtung 130 kann beispielsweise, wie in Fig. 1 schematisch dargestellt ist, in eine Schweißstromquelle 200 des Schweißgeräts 1000 integriert sein, aber auch separat davon ausgebildet sein.

Die Steuereinrichtung 130 ist in jedem Fall zum Durchführen eines Drahtvorschub-Programms eingerichtet, wobei das Drahtvorschub-Programm mindestens zwei Drahtvorschub-Phasentypen mit jeweils zumindest unterschiedlichen mittleren Drahtvorschub-Geschwindigkeiten Vd des Schweißdraht-Pull-Motors 129 umfasst. Das Drahtvorschub-Programm wird typischerweise parallel und synchron zu einem oder als Teil eines Schweißprogramms ausgeführt werden, welches durch eine Steuervorrichtung der Schweißstromquelle 200 ausgeführt wird, damit die elektrischen Schweißparametereinstellungen (insbesondere Schweißspannung und Schweißstrom) korrekt auf die Drahtvorschubgeschwindigkeit Vd des Schweißdrahts 42 abgestimmt sind und umgekehrt.

Da die vorliegende Erfindung sich insbesondere mit Drahtabspulgeschwindigkeiten Va und Drahtvorschubgeschwindigkeiten Vd und weniger mit elektrischen Schweißparametern befasst, werden diese hierin nur gelegentlich erwähnt werden. Es versteht sich jedoch, dass diese typischerweise mit eingestellt werden. Insbesondere kann durch eine Steuervorrichtung der Schweißstromquelle 200 eine übergeordnete Steuerung erfolgen, welche der Steuereinrichtung 130 des Drahtvorschubsystems 100 Anweisungen übermittelt oder erteilt.

In weiteren möglichen Ausführungsformen kann die Drahtseele 43 selbst als Schweißdraht-Speichereinrichtung fungieren. Die Drahtseele 43 lässt dem Schweißdraht 42 typischerweise ein gewisses Spiel, welches somit als Schweißdrahtpuffer verwendet werden kann. Ein Vorteil liegt hierbei darin, dass keinerlei zusätzlichen physischen Bauteile notwendig sind, und die Schweißdraht-Speichereinrichtung auch keinerlei Störkontur der Außenkontur des Schweißgeräts 100 hinzufügt. Demgegenüber steht die verhältnismäßig geringe Kapazität eines derart realisierten Schweißdrahtpuffers.

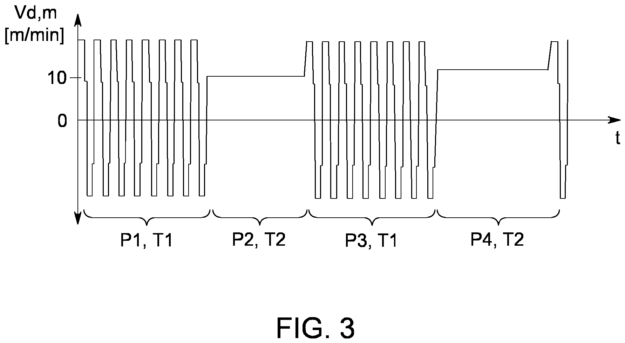

Fig. 3 erläutert beispielhaft ein Drahtvorschub-Programm mit vier Drahtvorschubphasen P1, P2, P3, P4 von insgesamt zwei verschiedenen Drahtvorschub-Phasentypen T1, T2:
Eine zeitlich erste Drahtvorschubphase P1 und eine zeitlich dritte Drahtvorschubphase P3 sind jeweils von einem ersten Drahtvorschub-Phasentyp T1. Dieser erste Drahtvorschub-Phasentyp T1 entsprecht hier einer reversierenden Drahtbewegung mit schnell abwechselnden positiven und negativen momentanen Drahtvorschubgeschwindigkeiten Vd,m, welche im Mittel eine leicht positive durchschnittliche Drahtvorschubgeschwindigkeit Vd ergeben, beispielsweise 3m/min. In einem so genannten "Cold Metal Transfer"-Verfahren kann so beispielsweise durch Rückfahren des Schweißdrahts 42 jeweils ein Lichtbogen gezündet werden, durch welche ein Tropfen von dem Schweißdraht 42 abgeschmolzen wird, und durch Vorwärtsfahren des Schweißdrahts 42 dann dieser Tropfen auf einem Werkstück abgesetzt werden. Die positive durchschnittliche Drahtvorschubgeschwindigkeit Vd entspricht somit der Abschmelzrate des Schweißdrahts 42 in diesem Verfahren und gleicht dessen Verbrauch fortwährend aus.

Eine zeitlich zweite Drahtvorschubphase P2 und eine zeitlich vierte Drahtvorschubphase P4 sind jeweils von einem zweiten Drahtvorschub-Phasentyp T2. Dieser zweite Drahtvorschub-Phasentyp T2 ist hier ein Drahtvorschub-Phasentyp mit konstanter Drahtvorschubgeschwindigkeit Vd, beispielsweise 10 m/min. In dieser Zeit kann beispielsweise ein parallel ablaufendes Schweißprogramm eine Pulsschweißphase aufweisen. Das Schweißprogramm ist in diesem Beispiel somit ein gemischter Prozess (oder: Mix-Prozess), in welchem Cold-Metal-Transfer-Phasen und Pulsschweißphasen sich abwechseln. Dazu parallel umfasst das Drahtvorschub-Programm an dem Schweißdraht-Pull-Motor 121 die in Fig. 3 gezeigten Verläufe der momentanen Drahtvorschubgeschwindigkeit Vd,m, womit auch die durchschnittliche Drahtvorschubgeschwindigkeit Vd gegeben ist.

In diesem Beispiel ist ersichtlich, dass jeweils zu Beginn der zweiten und der vierten Drahtvorschubphase P2, P4 die durchschnittliche Drahtvorschubgeschwindigkeit Vd drastisch ansteigt, nämlich von 3 m/min auf 10 m/min. Daher ist es von großem Vorteil, wenn zu Beginn der zweiten und der vierten Drahtvorschubphase P2, P4 der Schweißdrahtpuffer bereits auf ein höheres Schweißdrahtpufferniveau eingestellt ist als in der ersten und der dritten Drahtvorschubphase P1, P3.

Dementsprechend ist die Steuereinrichtung 130 erfindungsgemäß dazu eingerichtet, den Schweißdrahtpuffer, zumindest durch entsprechendes Steuern des Schweißdraht-Push-Motors 121 (ggfs. auch durch zusätzliches Steuern des Schweißdraht-Pull-Motors 129), in einer Drahtvorschubphase P1, P3 des ersten Drahtvorschub-Phasentyps T1 vorbereitend für eine jeweils nachfolgende Drahtvorschubphase P2, P4 des zweiten Drahtvorschub-Phasentyps T2 einzustellen.

Je stärker sich die durchschnittlichen Drahtvorschubgeschwindigkeiten Vd unterscheiden, desto stärker treten die Vorteile der vorliegenden Erfindung hervor. Die Erfindung ist somit besonders vorteilhaft, wenn ein betragsmäßiger Unterschied zwischen einer mittleren Drahtvorschubgeschwindigkeit Vd(T1) des ersten Drahtvorschub-Phasentyps T1 und einer mittleren Drahtvorschubgeschwindigkeit Vd(T2) eines unmittelbar darauffolgenden zweiten Drahtvorschub-Phasentyps T2 mindestens 0,1 m/min, bevorzugt 1 m/min, insbesondere mindestens 5 m/min, besonders bevorzugt mindestens 7 m/min beträgt.

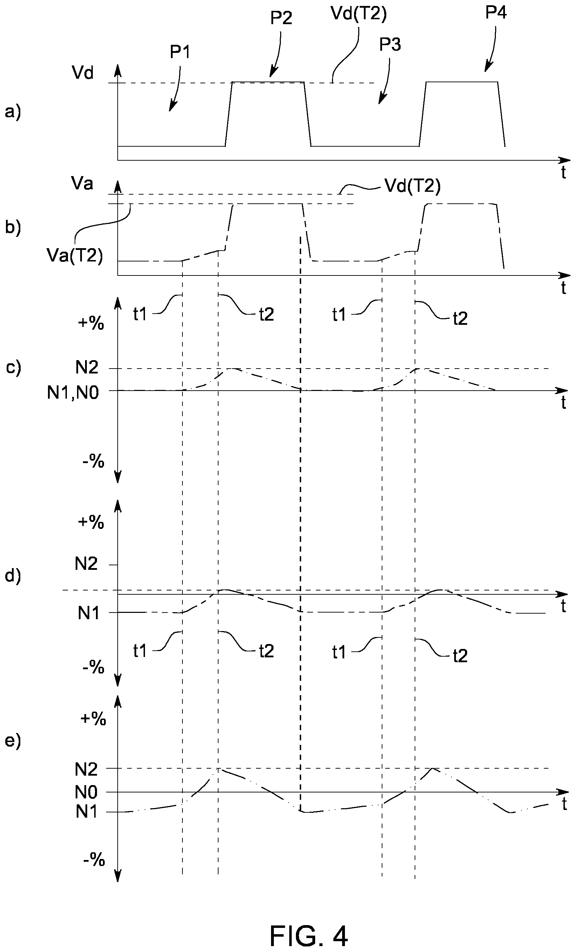

Ein beispielhafter Ablauf eines erfindungsgemäßen Drahtvorschub-Programms ist anhand von Fig. 4 dargestellt. Fig. 4 zeigt Graphen, die verschiedene Parameter und Größen während des Drahtvorschub-Programms im zeitlichen Verlauf darstellen.

Fig. 4a) zeigt die durchschnittliche Drahtvorschubgeschwindigkeit Vd an dem Schweißdraht-Pull-Motor 129 als Funktion der Zeit. Klar erkennbar sind vier verschiedene Drahtvorschubphasen mit insgesamt 2 verschiedenen Drahtvorschub-Phasentypen, bei denen es sich beispielsweise um die Drahtvorschubphasen P1, P2, P3, P4 aus Fig. 3 handeln kann, also etwa mit durchschnittlichen Drahtvorschubgeschwindigkeiten Vd(T1)=Vd(P1)=Vd(P3)=3m/min und Vd(T2)=Vd(P2)=Vd(P4)=10m/min.

Fig. 4b) zeigt nun eine durch das erfindungsgemäße Verfahren angepasste Abspulgeschwindigkeit Va an dem Schweißdraht-Push-Motor 121, welche eine geringfügige Modifikation der durchschnittlichen Drahtvorschubgeschwindigkeit Vd aus Fig. 4a) darstellt. Zu einem ersten Zeitpunkt t1 wird gemäß dem Drahtvorschub-Programm durch die Steuereinrichtung 130 die durchschnittliche Abspulgeschwindigkeit Va stetig und streng monoton erhöht, bis sie zu einem Zeitpunkt t2 (beispielsweise mit Beginn der nachfolgenden Drahtvorschubphase P2) wieder deckungsgleich mit der durchschnittlichen Drahtvorschubgeschwindigkeit Vd verläuft, welche dem parallel verlaufenden Schweißverfahren angepasst ist.

Im dargestellten Beispiel wird die durchschnittliche Abspulgeschwindigkeit ab dem ersten Zeitpunkt t1 linear gegenüber der gleichzeitigen durchschnittlichen Drahtvorschubgeschwindigkeit Vd erhöht, typischerweise bis zum Ende der ersten Drahtvorschubphase P1. Die (konstante) Beschleunigung, mit welcher die Erhöhung erfolgt, ist im gezeigten Beispiel niedriger als eine höhere Beschleunigung, welche anschließend - je nach Variante - noch verwendet werden kann, damit rechtzeitig die gewünschte durchschnittliche Abspulgeschwindigkeit Va zu Beginn der Drahtvorschubphasen P2, P4 des zweiten Drahtvorschub-Phasentyps T2 vorliegt.

Diese höhere Beschleunigung kann gleich sein der gleichzeitig für die durchschnittliche Drahtvorschubgeschwindigkeit Vd verwendeten Beschleunigung, sodass insbesondere die Geschwindigkeitsgraphen der durchschnittlichen Drahtvorschubgeschwindigkeit Vd und der durchschnittlichen Abspulgeschwindigkeit Va hier zeitweise wieder gleich sein können. Diese höhere Beschleunigung kann gleich einer maximalen Beschleunigung des Drahtvorschub-Pushmotors 121 sein, dessen maximale Beschleunigung typischerweise kleiner ist als eine maximale Beschleunigung des Drahtvorschub-Pullmotors 129.

Fig. 4c) zeigt, wie der Schweißdrahtpuffer von Beginn der ersten Drahtvorschubphase P1 an auf einem ersten Schweißdrahtpufferniveau N1 liegt. Der Schweißdrahtpuffer ist hier in Prozentabweichungen von dem ersten Schweißdrahtpufferniveau N1 dargestellt. Dabei kann es sich um das Schweißdrahtpuffer N0 einer Nulllage (oder: Ruhelage, oder: Mittelstellung) des Schweißdrahts 42 in der Schweißdraht-Speichereinrichtung 110 handeln. Die Nulllage, oder Mittelstellung, kann insbesondere dadurch gekennzeichnet sein, dass von ihr aus der Schweißdrahtpuffer durch die Schweißdraht-Speichervorrichtung um ebenso viel erhöht wie verringert werden kann.

Ab dem Zeitpunkt t1 bis zum Zeitpunkt t2 wird der Schweißdrahtpuffer auf ein zweites, höheres Schweißdrahtpuffernivau N2 erhöht, welches passend zum Beginn der zweiten Drahtvorschubphase P2 vorliegt. Bei der in Fig. 4b) dargestellten linearen Erhöhung der durchschnittlichen Abspulgeschwindigkeit Va gegenüber der durchschnittlichen Drahtvorschubgeschwindigkeit Vd wächst das Schweißdrahtpufferniveau entsprechend quadratisch von N1 auf N2 an.

Die Flanken für den Anstieg und Abfall für die Drahtvorschubgeschwindigkeit Vd jeweils zu Beginn und am Ende sind, wie bereits erwähnt, typischerweise aufgrund der endlichen Beschleunigungsfähigkeit des Drahtvorschub-Pushmotors 121 technisch bedingt; sie werden typischerweise möglichst steil eingestellt, sodass diese Übergänge in einigen Varianten als instantan angesehen werden können.

Der Zeitpunkt t1, an welchem das Einstellen des Schweißdrahtpuffers für die nachfolgende Drahtvorschubphase P2, P4 beginnt, kann auf vielfältige Weise bestimmt werden oder sein, was je nach Anwendung und insbesondere in Abhängigkeit von einer parallel verlaufenden Schweißphase ausgewählt bzw. festgelegt wird.

Beispielsweise kann der Zeitpunkt t1 nach Ablauf einer vorbestimmten Zeitdauer nach Beginn der jeweiligen Drahtvorschubphase P1, P3 beginnen, etwa nach Ablauf einer Zeitdauer von 10 Millisekunden. Es kann auch vorgesehen sein, dass der Zeitpunkt t1 spätestens mit Ablauf eines vorbestimmten Prozentsatzes der jeweiligen Drahtvorschubphase P1, P3 beginnt, vorzugsweise eines Prozentsatzes von 50% oder höher, etwa nach einem Ablauf von 60% der jeweiligen Drahtvorschubphase, oder 70%, 80%, 90% oder dergleichen.

Möglich ist auch, dass der Zeitpunkt t1 in Abhängigkeit von einem parallel verlaufenden Schweißprogramm erfolgt. Beispielsweise kann der Zeitpunkt t1 spätestens nach Durchführung einer vorbestimmten Anzahl von Schweißzyklen durch das Schweißgerät erfolgen. Handelt es sich bei der parallel verlaufenden Schweißphase des Schweißprogramms etwa um eine Pulsschweißphase, kann vorgesehen sein, dass der Zeitpunkt t1 spätestens nach einer vorbestimmten Anzahl an Schweißpulsen einsetzt. Bei einer Schweißphase mit oszillierendem Drahtvorschub, wie der genannten Cold-Metal-Transfer-Phase, kann dies etwa nach einer vorbestimmten Anzahl von Perioden der Oszillation vorgesehen sein.

Bei dem gezeigten Beispiel findet während der Drahtvorschubphasen P2, P4 des zweiten Drahtvorschub-Phasentyps T2 eine Verringerung der dort konstanten Abspulgeschwindigkeit Va im Vergleich zur dort konstanten durchschnittlichen Drahtvorschubgeschwindigkeit Vd statt (d.h. Va(T2)<Vd(T2)) sodass der Schweißdrahtpuffer in den Drahtvorschubphasen P2, P4 des zweiten Drahtvorschub-Phasentyps T2 linear wieder abgebaut wird und zu Beginn der Drahtvorschubphasen P1, P3 des ersten Drahtvorschub-Phasentyps T1 wieder in der Nulllage ist, wie in Fig. 4c) ersichtlich ist. Auf diese Weise wird eine periodische Abfolge der Drahtvorschubphasen sowie, von etwaigen kurzfristigen Schwankungen abgesehen, auch des Schweißdrahtpufferniveaus erzielt. Va(T2) kann hier beispielsweise zwischen 50% und 90% von Vd(T2) liegen, insbesondere zwischen 70% und 85% von Vd(T2).

Wie im Vorangehenden jedoch bereits ausführlich erläutert wurde, kann ein Einstellen des Schweißdrahtpuffers für die jeweils nachfolgende Drahtvorschubphase P1-P4 auch in Drahtvorschubphasen P1-P4 mehrerer Drahtvorschub-Phasentypen T1, T2 erfolgen, oder sogar in jeder Drahtvorschubphase P1-P4.

Fig. 4d) zeigt eine Variante des vorstehend beschriebenen Verfahrens, bei welcher der Schweißdrahtpuffer mit einem Offset gegenüber der Nulllage versehen ist. Das erste Schweißdrahtpufferniveau N1 ist diesem gegenüber verkleinert und das zweite Schweißdrahtpufferniveau N2 ist diesem gegenüber erhöht. In der gezeigten Variante ist ein Schweißdrahtniveau N0 der Nulllage dabei nicht mittig zwischen den beiden Schweißdrahtpufferniveaus N1, N2, sondern näher an dem erhöhten zweiten Schweißdrahtpufferniveau N2 als an dem verringerten ersten Schweißdrahtpufferniveau N1.

Fig. 4e) zeigt eine weitere Variante, bei welcher der Schweißdrahtpuffer jeweils zu Beginn der nächsten Drahtvorschubphase P1-P4 auf ein zugehöriges Schweißdrahtpufferniveau N1, N2 eingestellt wird, wobei sich alle Schweißdrahtpufferniveaus N1, N2 von dem Schweißdrahtniveau N0 der Nulllage unterscheiden.

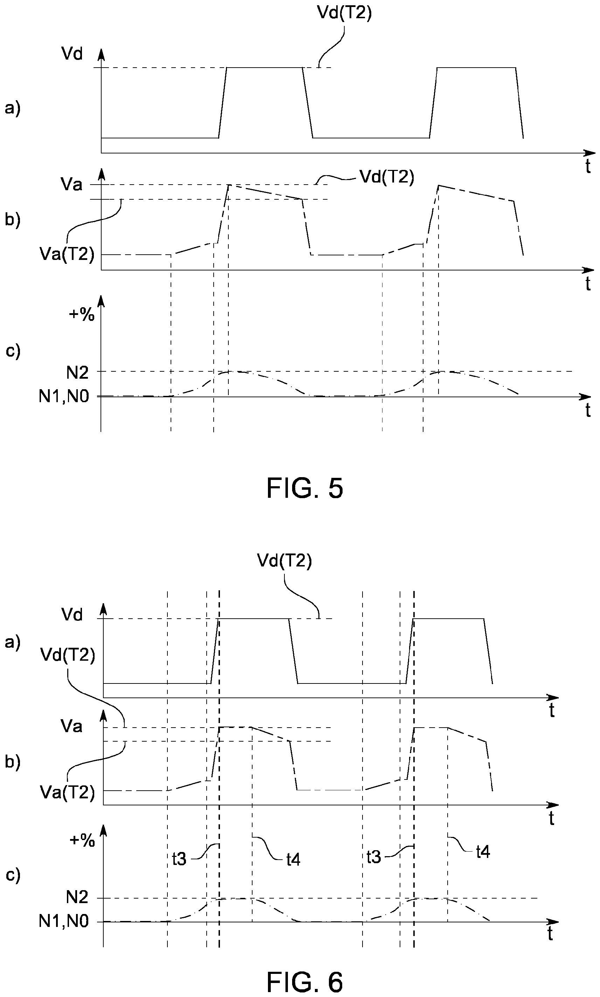

Fig. 5a) bis Fig. 5c) zeigen jeweils dieselbe Größe wie die entsprechende der Figuren 4a) bis 4c), und zwar gemäß einer weiteren Variante des erfindungsgemäßen Drahtvorschubprogramms.

Bei der Variante gemäß den Figuren 5a) bis 5c) ist die durchschnittliche Abspulgeschwindigkeit Va während der Drahtvorschubphasen P2, P4 des zweiten Drahtvorschub-Phasentyps T2 nicht konstant (wie etwa in Fig. 4b)), sondern wird im Laufe der Drahtvorschubphasen P2, P4 des zweiten Drahtvorschub-Phasentyps T2 jeweils linear verringert. Dadurch verringert sich, wie in Fig. 5c) ersichtlich ist, das Schweißdrahtpufferniveau von dem zweiten Schweißdrahtpufferniveau N2 in quadratischer Weise wieder auf das erste Schweißdrahtpufferniveau N1 (hier: die Nulllage N0).

Die lineare Verringerung setzt bei der Variante von Fig. 5b) gleich zu Beginn der Drahtvorschubphasen P2, P4 des zweiten Drahtvorschub-Phasentyps T2 ein, beispielsweise beginnend mit demselben Wert, den zu diesem Zeitpunkt auch die durchschnittliche Drahtvorschubgeschwindigkeit Vd(T2) des Schweißdraht-Pushmotors 121 aufweist, und dann linear auf einen Wert Va(T2) mit 0<Va(T2)<Vd(T2) abfallend. Auch der hier verwendete Wert Va(T2) kann beispielsweise zwischen 50% und 90% von Vd(T2) liegen, insbesondere zwischen 70% und 85% von Vd(T2).

Fig. 6a) bis Fig. 6c) zeigt eine weitere Variante des erfindungsgemäßen Drahtvorschubprogramms.

Bei der Variante gemäß Figur 6b) beginnt der lineare Abfall während der Drahtvorschubphasen P2, P4 des zweiten Drahtvorschub-Phasentyps T2 nicht unmittelbar mit Beginn der jeweiligen Drahtvorschubphase P2, P4 (zum Zeitpunkt t3), sondern erst später, hier zum Zeitpunkt t4. Der Zeitpunkt t4 kann je nach Variante etwa dadurch bestimmt sein, dass ein vorbestimmter Prozentsatz der entsprechenden Drahtvorschubphase P2, P4 abgelaufen ist, oder nachdem eine vorbestimmte Zeitdauer abgelaufen ist, oder eine vorbestimmte Anzahl von Schweißzyklen durchgeführt wurde, oder dergleichen.

Der Beginn der Drahtvorschubphasen P2, P4 des zweiten Drahtvorschub-Phasentyps T2 kann zwischen t3 und t4 für die durchschnittliche Abspulgeschwindigkeit Va entweder mit demselben Wert erfolgen wie die gleichzeitige durchschnittliche Drahtvorschubgeschwindigkeit Vd(T2), wie in Fig. 6b) gezeigt ist (weswegen das Schweißdrahtpufferniveau zunächst auf N2 verbleibt), oder mit einem niedrigeren Wert (was zu einem linearen Abfall des Schweißdrahtpufferniveaus führen würde). Auch der hier verwendete Wert Va(T2) kann beispielsweise zwischen 50% und 90% von Vd(T2) liegen, insbesondere zwischen 70% und 85% von Vd(T2).

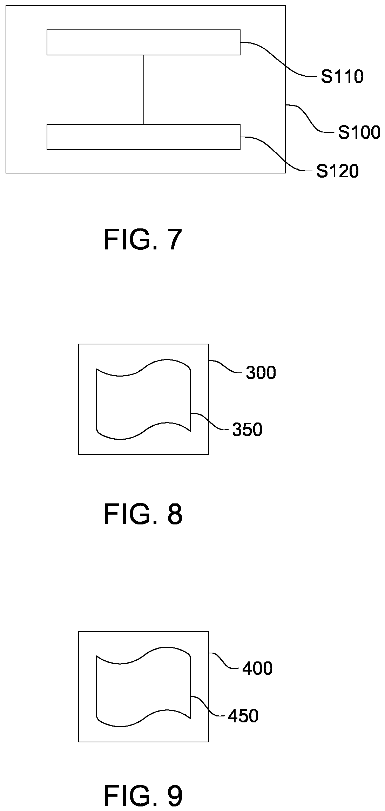

Fig. 7 zeigt ein schematisches Flussdiagramm zum Erläutern eines Verfahrens gemäß dem dritten Aspekt der vorliegenden Erfindung, d.h. eines Verfahrens zum Fördern eines Schweißdrahts für ein Schweißgerät. Das Verfahren kann mit einem Drahtvorschubsystem 100 und/oder einem Schweißgerät 1000 der vorliegenden Erfindung durchgeführt werden und ist daher gemäß allen mit Bezug auf das Drahtvorschubsystem 100 und/oder das Schweißgerät 1000 beschriebenen Optionen, Varianten, Ausführungsformen und Weiterentwicklungen anpassbar und umgekehrt. Das Verfahren kann auch unabhängig davon durchgeführt werden. Zur besseren Erläuterung werden im Nachfolgenden dennoch verschiedene Bezugszeichen verwendet, welche sich auf die voranstehend beschriebenen Ausführungsformen beziehen.

In einem Schritt S100 des Verfahrens wird ein Drahtvorschub-Programm durchgeführt, wobei das Drahtvorschub-Programm mindestens zwei Drahtvorschub-Phasentypen T1, T2 mit jeweils zumindest unterschiedlichen mittleren Drahtvorschubgeschwindigkeiten Vd eines Schweißdraht-Pull-Motors 129 des Schweißgeräts 1000 umfasst. Im Vorangehenden wurde bereits eine Vielzahl von möglichen Drahtvorschub-Programmen unterschiedlicher Zusammensetzung beschrieben.

Das Durchführen S100 des Drahtvorschub-Programms umfasst einen Schritt S110, in welchem zumindest ein Schweißdraht-Push-Motors 121 gesteuert wird, und einen Schritt S120, in welchem in einer jeweiligen Drahtvorschubphase P1, P3 eines ersten Drahtvorschub-Phasentyps T1 ein Schweißdrahtpuffer vorbereitend auf eine jeweils nachfolgende Drahtvorschubphase P2, P4 eines zweiten Drahtvorschub-Phasentyps T2 eingestellt wird, wobei der Schritt S120 unter anderem - oder vollständig - im Rahmen der Steuerung in dem Schritt S110 erfolgen kann.

In jedem Fall wird in dem Schritt S120 der Schweißdrahtpuffer durch Variieren einer aktuell in einer Schweißdraht-Speichereinrichtung 110 angeordneten, variablen Drahtmenge des die Schweißdraht-Speichereinrichtung 110 durchquerenden Schweißdrahts 42 eingestellt. Dies kann beispielsweise erfolgen, wie im Vorangehenden mit Bezug auf die Figuren 1-4 bereits ausführlich erläutert wurde.

Fig. 8 zeigt ein schematisches Blockdiagramm eines Computerprogrammprodukts 300 gemäß einer Ausführungsform des vierten Aspekts der vorliegenden Erfindung. Das Computerprogrammprodukt 300 umfasst ausführbaren Programmcode 350, welcher dazu eingerichtet ist, wenn er ausgeführt wird (z.B. durch eine Recheneinheit), das Verfahren gemäß einer Ausführungsform der vorliegenden Erfindung durchzuführen oder zu steuern, beispielsweise gemäß einer der Varianten aus Fig. 4 c)-e).

Fig. 9 zeigt ein schematisches Blockdiagramm eines nicht-flüchtigen computerlesbaren Datenspeichermediums 400 gemäß einer Ausführungsform der vorliegenden Erfindung. Das Datenspeichermedium 400 umfasst ausführbaren Programmcode 450, welcher dazu eingerichtet ist, wenn er ausgeführt wird (z.B. durch eine Recheneinheit), das Verfahren gemäß einer Ausführungsform der vorliegenden Erfindung durchzuführen oder zu steuern, beispielsweise gemäß einer der Varianten aus Fig. 4 c)-e).

Das nicht-flüchtige computerlesbare Datenspeichermedium 400 kann beispielsweise als ein Halbleiterspeicher, z. B. ein SSD-Speicherstein ausgebildet sein oder einen solchen aufweisen. Das Datenspeichermedium 400 kann auch eine CD, DVD, Blu-Ray oder eine magnetische Speichervorrichtung aufweisen oder umfassen.

Die vorstehende Beschreibung der offenbarten Ausführungsformen enthält lediglich Beispiele für mögliche Umsetzungen, die beschrieben werden, um einen Fachmann in die Lage zu versetzen, die vorliegende Erfindung herzustellen oder verwenden zu können. Verschiedene Variationen und Modifikationen dieser Ausführungsformen sind für den Fachmann - nach Kenntnis der vorliegenden Erfindung - leicht ersichtlich, und die hierin definierten allgemeinen Prinzipien können auf andere Ausführungsformen angewendet werden, ohne vom Umfang der vorliegenden Offenbarung abzuweichen.

Somit soll die vorliegende Erfindung nicht auf die hierin gezeigten, spezifischen Ausführungsformen beschränkt sein, sondern ihr soll der breiteste Umfang zugestanden werden, der mit den hierin offenbarten Prinzipien und Merkmalen übereinstimmt.

### Bezugszeichenliste

- 10: Schweißbrenner
- 23: Schlauchpaket
- 28: Roboter
- 29: Roboterarm
- 30: Manipulator
- 41: Haltevorrichtung
- 42: Schweißdraht
- 43: Drahtseele
- 50: Drahtführungsschlauch
- 100: Drahtvorschubsystem
- 110: Schweißdraht-Speichereinrichtung
- 111: Gehäuse
- 112: Hebel
- 113: Klemme
- 121: Schweißdraht-Push-Motor
- 129: Schweißdraht-Pull-Motor
- 130: Steuereinrichtung
- 200: Schweißstromquelle
- 300: Computerprogramm
- 350: Programmcode
- 400: Datenspeichermedium
- 450: Programmcode
- 1000: Schweißgerät

- N0: Schweißdrahtpufferniveau der Nulllage
- N1: erstes Schweißdrahtpufferniveau
- N2: zweites Schweißdrahtpufferniveau
- P1: erste Drahtvorschubphase
- P2: zweite Drahtvorschubphase
- P3: dritte Drahtvorschubphase
- P4: vierte Drahtvorschubphase
- R: Krümmungsradius
- t1: erster Zeitpunkt
- t2: zweiter Zeitpunkt
- t3: Zeitpunkt
- t4: Zeitpunkt
- T1: erster Drahtvorschub-Phasentyp
- T2: zweiter Drahtvorschub-Phasentyp
- Va: Abspulgeschwindigkeit des Schweißdraht-Push-Motors
- Vd: Drahtvorschubgeschwindigkeit des Schweißdraht-Pull-Motors
- x1: erste Position
- x2: zweite Position

## Patentansprüche

1. Drahtvorschubsystem (100) für ein Schweißgerät (1000), umfassend zumindest:
eine Schweißdraht-Speichereinrichtung (110), welche derart ausgebildet ist, dass eine aktuell darin angeordnete, variable Drahtmenge eines die Schweißdraht-Speichereinrichtung (110) durchquerenden Schweißdrahts (42) als ein einstellbarer Schweißdrahtpuffer fungiert;
einen Schweißdraht-Push-Motor (121), mittels welchem der Schweißdraht (42) zu der Schweißdraht-Speichereinrichtung (100) hin förderbar ist;
einen Schweißdraht-Pull-Motor (129), mittels welchem der Schweißdraht (42) von der Schweißdraht-Speichereinrichtung (100) fort förderbar ist; und
eine Steuereinrichtung (130), welche zum Durchführen eines Drahtvorschub-Programms eingerichtet ist, wobei das Drahtvorschub-Programm mindestens zwei Drahtvorschub-Phasentypen mit jeweils zumindest unterschiedlichen mittleren Drahtvorschub-Geschwindigkeiten (Vd) des Schweißdraht-Pull-Motors (129) umfasst, und
wobei die Steuereinrichtung (130) außerdem dazu eingerichtet ist, den Schweißdrahtpuffer, zumindest durch entsprechendes Steuern des Schweißdraht-Push-Motors (121), in einer Drahtvorschubphase (P1, P3) eines ersten Drahtvorschub-Phasentyps (T1) vorbereitend für eine jeweils nachfolgende Drahtvorschubphase (P2, P4) eines zweiten Drahtvorschub-Phasentyps (T2) einzustellen.

2. Drahtvorschubsystem (100) nach Anspruch 1,
wobei der erste Drahtvorschub-Phasentyp (T1) eine erste durchschnittliche Drahtvorschubgeschwindigkeit des Schweißdraht-Pull-Motors (129) aufweist; und
wobei die Steuereinrichtung (130) dazu eingerichtet ist, in jeder Drahtvorschubphase (P1, P3) des ersten Drahtvorschub-Phasentyps (T1) den Schweißdrahtpuffer von einem ersten Schweißdrahtpufferniveau (N1) auf ein zweites Schweißdrahtpufferniveau (N2) zu erhöhen, falls der zweite Drahtvorschub-Phasentyp (T2) eine zweite durchschnittliche Drahtvorschubgeschwindigkeit (Vd) des Schweißdraht-Pull-Motors (129) aufweist, welche höher ist als die erste durchschnittliche Drahtvorschubgeschwindigkeit (Vd).

3. Drahtvorschubsystem (100) nach Anspruch 2,
wobei die Steuereinrichtung (130) dazu eingerichtet ist, den Schweißdrahtpuffer jeweils spätestens zu Beginn von Drahtvorschubphasen (P1, P3) des ersten Drahtvorschub-Phasentyps (T1) auf das erste Schweißdrahtpufferniveau (N1), und jeweils spätestens zu Beginn von Drahtvorschubphasen (P2, P4) des zweiten Drahtvorschub-Phasentyps (T2) auf das zweite Schweißdrahtpufferniveau (N2) einzustellen.

4. Drahtvorschubsystem (100) nach Anspruch 2 oder 3,
wobei die Steuereinrichtung (130) dazu eingerichtet ist, in einer jeweiligen Drahtvorschubphase (P2, P4) des zweiten Drahtvorschub-Phasentyps (T2) den Schweißdrahtpuffer von dem zweiten Schweißdrahtpufferniveau (N2):
auf das erste Schweißdrahtpufferniveau (N1) zu verringern, falls sich an die Drahtvorschubphasen (P2, P4) des zweiten Drahtvorschub-Phasentyps (T2) jeweils eine Drahtvorschubphase (P1, P2) des ersten Drahtvorschub-Phasentyps (T1) anschließt,
oder
auf ein drittes Schweißdrahtpufferniveau zu verringern, welches niedriger ist als das zweite
Schweißdrahtpufferniveau (N2), falls sich an die Drahtvorschubphasen (P2, P4) des zweiten Drahtvorschub-Phasentyps (T2) jeweils eine Drahtvorschubphase eines dritten Drahtvorschub-Phasentyps anschließt, welcher eine dritte durchschnittliche Drahtvorschubgeschwindigkeit (Vd) des Schweißdraht-Pull-Motors (129) aufweist, welche kleiner ist als die zweite durchschnittliche Drahtvorschubgeschwindigkeit.

5. Drahtvorschubsystem (100) nach einem der Ansprüche 2 bis 4, wobei ein betragsmäßiger Unterschied zwischen einer mittleren Drahtvorschubgeschwindigkeit (Vd) des ersten Drahtvorschub-Phasentyps (T1) und einer mittleren Drahtvorschubgeschwindigkeit (Vd) des zweiten Drahtvorschub-Phasentyps (T2) mindestens 0,1 m/min, bevorzugt 1 m/min, insbesondere mindestens 5 m/min, besonders bevorzugt mindestens 7 m/min beträgt.

6. Drahtvorschubsystem (100) nach einem der Ansprüche 1 bis 5, wobei die Steuereinrichtung (130) dazu eingerichtet ist, dem Schweißdraht-Push-Motor (121) zumindest während Drahtvorschubphasen (P1, P3) des ersten Drahtvorschub-Phasentyps (T1) eine Drahtabspulbeschleunigung (Va) und/oder ein mit dieser während der entsprechenden Drahtvorschubphase (P1, P3) zu erreichendes Schweißdrahtpufferniveau (N2) vorzugeben.

7. Drahtvorschubsystem (100) nach einem der Ansprüche 1 bis 6, wobei die Steuereinrichtung (130) derart eingestellt ist, dass das Einstellen des Schweißdrahtpuffers in einer jeweiligen Drahtvorschubphase (P1, P2, P3, P4) spätestens mit Ablauf eines vorbestimmten Prozentsatzes der jeweiligen Drahtvorschubphase (P1, P2, P3, P4) beginnt, vorzugsweise eines Prozentsatzes von 50% oder höher.

8. Drahtvorschubsystem (100) nach einem der Ansprüche 1 bis 7, wobei die Steuereinrichtung (130) derart eingestellt ist, dass das Einstellen des Schweißdrahtpuffers in einer jeweiligen Drahtvorschubphase (P1, P2, P3, P4) spätestens mit Ablauf einer vorbestimmten Zeitdauer nach Beginn der jeweiligen Drahtvorschubphase (P1, P2, P3, P4) beginnt, insbesondere nach Ablauf einer Zeitdauer von 10 Millisekunden.

9. Drahtvorschubsystem (100) nach einem der Ansprüche 1 bis 8, wobei die Steuereinrichtung (130) derart eingestellt ist, dass das Einstellen des Schweißdrahtpuffers in einer jeweiligen Drahtvorschubphase (P1, P2, P3, P4) spätestens nach Durchführung einer vorbestimmten Anzahl von Schweißzyklen durch das Schweißgerät (1000) während der Drahtvorschubphase (P1, P2, P3, P4) beginnt.

10. Drahtvorschubsystem (100) nach einem der Ansprüche 1 bis 9,
wobei die Steuereinrichtung (130) derart eingestellt ist, dass sich mindestens zwei Drahtvorschub-Phasentypen (T1, T2) in regelmäßiger Abfolge gegenseitig abwechseln, und während jeder Drahtvorschubphase (P1, P2, P3, P4) jeweils der Schweißdrahtpuffer für die jeweils nachfolgende Drahtvorschubphase (P1, P2, P3, P4) eingestellt wird.

11. Drahtvorschubsystem (100) nach einem der Ansprüche 1 bis 10, wobei die Steuereinrichtung (130) dazu eingerichtet ist, den Schweißdrahtpuffer während den Drahtvorschubphasen (P1, P2, P3, P4) im laufenden Betrieb des
Drahtvorschubsystems (100) und/oder im laufenden Betrieb eines Schweißgeräts (1000) einzustellen.

12. Drahtvorschubsystem (100) nach einem der Ansprüche 1 bis 11, wobei eine Drahtseele (43) für den Schweißdraht (42) als Schweißdraht-Speichervorrichtung fungiert, und ein Drahtspiel des Schweißdrahts (42) in der Drahtseele (43) den Schweißdrahtpuffer bereitstellt.

13. Schweißgerät (1000), umfassend eine Schweißstromquelle (200) und ein Drahtvorschubsystem (100) nach einem der Ansprüche 1 bis 12,
wobei die Steuereinrichtung (130) des
Drahtvorschubsystems (100) in der Schweißstromquelle (200) angeordnet ist, insbesondere als Teil einer Steuerungsvorrichtung der Schweißstromquelle (200).

14. Verfahren zum Fördern eines Schweißdrahts (42) für ein Schweißgerät (1000), umfassend:
Durchführen (S100) eines Drahtvorschub-Programms, wobei das Drahtvorschub-Programm mindestens zwei Drahtvorschub-Phasentypen (T1, T2) mit jeweils zumindest unterschiedlichen mittleren Drahtvorschubgeschwindigkeiten (Vd) eines Schweißdraht-Pull-Motors (129) des Schweißgeräts (1000) umfasst;
wobei das Durchführen des Drahtvorschub-Programms umfasst:
Steuern (S110) zumindest eines Schweißdraht-Push-Motors (121); und
Einstellen (S120), in einer jeweiligen Drahtvorschubphase (P1, P3) eines ersten Drahtvorschub-Phasentyps (T1), eines Schweißdrahtpuffers vorbereitend auf eine jeweils nachfolgende Drahtvorschubphase (P2, P4)
eines zweiten Drahtvorschub-Phasentyps (T2),
wobei der Schweißdrahtpuffer durch Variieren einer aktuell in einer Schweißdraht-Speichereinrichtung (110) angeordneten, variablen Drahtmenge des die Schweißdraht-Speichereinrichtung (110) durchquerenden Schweißdrahts (42) eingestellt wird.

15. Computerprogrammprodukt (300), umfassend ausführbaren Programmcode (350), welcher dazu ausgelegt ist, wenn er von einer Recheneinrichtung ausgeführt wird, das Verfahren gemäß Anspruch 14 auszuführen.
